# EUROPEAN PATENT APPLICATION

(11) **EP 4 293 537 A1**
(43) Date of publication of application: **20.12.2023**
(21) Application number: 23178573.4
(22) Date of filing: 12.06.2023
(51) Int. Cl.: G06F 16/953

(54) **ITEM RETRIEVAL USING QUERY CORE INTENT DETECTION**

(30) Priority: 14.06.2022 US 202217840337
(71) Applicant: eBay, Inc., San Jose, CA 95125 (US)
(72) Inventor: KHAN, Ishita Kamal, San Jose, 95125 (US); MANDAL, Aritra, San Jose, 95125 (US); TUNKELANG, Daniel, San Jose, 95125 (US); WU, Zhe, San Jose, 95125 (US); DONLEY, Mitchell, San Jose, 95125 (US)
(74) Representative: Müller-Boré & Partner Patentanwälte PartG mbB

(57) **Abstract**

A search system performs item retrieval using search query categorization that matches query intent. Category embeddings are generated for categories based on hierarchical data and search information. For instance, the category embeddings can be generated using information regarding hierarchical relationships between the categories, co-occurring relationships between categories identified from search information, and initial embeddings that encode query-related information for each category. Category clusters can be formed using the category embeddings. When a search query is received, one or more categories are identified from a category cluster and used for selecting search results for the search query.

## Description

### BACKGROUND

Search engines facilitate identifying and returning relevant items from electronic databases. Search engines receive search queries and provide search results for items that are responsive to the search queries. For a given search query, a search engine can process the search query, user data, contextual data, and/or other inputs to identify the most relevant items for the particular search. Search results for identified items can be presented on a user device in several different forms, for instance, on a search results user interface.

Search engines typically employ methods of query understanding to identify the intent of a search query in an effort to identify and return the most relevant items as search results. In some cases, this may include identifying a category for a search query and either filtering search results for items within that category or ranking search results based on the identified category.

### SUMMARY

Some aspects of the present technology relate to, among other things, a search system that generates category embeddings and leverages the category embeddings when characterizing search queries for item retrieval. The category embeddings are generated from hierarchical relationships between the categories and search information. The search information may be used to identify categories co-occurring in searches and initial embeddings for each category encoding query-related information for each category. As such, the category embeddings can encode the hierarchical relationships between categories, co-occurring relationships between categories, and query-related information from search information. Category clusters can be formed using the category embeddings. When a search query is received, one or more categories can be selected based on the category clusters and used to select search results to return. In some aspects, a search query is initially associated with a category, the category cluster for that category is identified, and a core intent category for that cluster is selected to categorize the search query.

This summary is provided to introduce a selection of concepts in a simplified form that are further described below in the Detailed Description. This summary is not intended to identify key features or essential features of the claimed subject matter, nor is it intended to be used as an aid in determining the scope of the claimed subject matter.

### BRIEF DESCRIPTION OF THE DRAWINGS

The present technology is described in detail below with reference to the attached drawing figures, wherein:
FIG. 1 is a block diagram illustrating an exemplary system in accordance with some implementations of the present disclosure;
FIG. 2 is a block diagram showing an example generation of an augmented graph in accordance with some implementations of the present disclosure;
FIG. 3 is a block diagram illustrating an example generation of a category embedding in accordance with some implementations of the present disclosure;
FIG. 4 is a flow diagram showing a method for item retrieval using query categorization based on query core intent detection in accordance with some implementations of the present disclosure;
FIG. 5 is a flow diagram showing a method for generating an augmented graph from a category taxonomy and search information in accordance with some implementations of the present disclosure; and
FIG. 6 is a block diagram of an exemplary computing environment suitable for use in implementations of the present disclosure.

### DETAILED DESCRIPTION

### Overview

Search systems typically attempt to understand the intent of a search query in order to identify and return relevant items as search results. In some instances, query understanding includes identifying a category for a given search query and returning items based on their relevance to the category. For instance, if a user submits a search query that includes the search keyword "iphone," the search system could determine the intent of the search query is to view smartphone devices, and as such, the search system categorizes the search query in the "Smartphones" category. Using this category, the search system may return search results directed to smartphone devices while excluding other types of items, such as smartphone accessories (e.g., cases, cables, and the like).

While query categorization can be an incredibly useful tool for search systems to return items relevant to query intent, shortcomings in existing search technologies often result in the consumption of an unnecessary quantity of computing resources (e.g., I/O costs, network packet generation costs, throughput, memory consumption, etc.). In particular, when the query understanding for a given search query results in a categorization that does not match the intent of the search query, the search results will likewise not match the intent. For instance, in some cases, a search query is mapped too deeply into a category hierarchy, essentially losing the intent of the search query. When a search query is mapped too deeply, the search system overly restricts the items returned by either removing relevant items or ranking relevant items too low in the result set. Because the search result set does not include relevant items, the user must submit additional search queries until the search system finally returns desired items. For example, a user may issue a first query to a search engine that returns a set of search results. The user may browse the search results and select certain search results to access the corresponding items. Selection of items causes retrieval of the items from various content sources. Additionally, in some cases, applications supporting those items are launched in order to render the items. When the search query is not properly categorized, the user must then repeat the process by submitting a new search query until desired search results are returned.

These repetitive inputs result in increased computing resource consumption, among other things. For instance, repetitive user queries result in packet generation costs that adversely affect computer network communications. Each time a user issues a query, the contents or payload of the query is typically supplemented with header information or other metadata within a packet in TCP/IP and other protocol networks. Accordingly, when this functionality is multiplied by all the inputs needed to obtain the desired data, there are throughput and latency costs by repetitively generating this metadata and sending it over a computer network. In some instances, these repetitive inputs (e.g., repetitive clicks, selections, or queries) increase storage device I/O (e.g., excess physical read/write head movements on non-volatile disk) because each time a user inputs unnecessary information, such as inputting several queries, the computing system often has to reach out to the storage device to perform a read or write operation, which is time consuming, error prone, and can eventually wear on components, such as a read/write head. Further, if users repetitively issue queries, it is expensive because processing queries consumes a lot of computing resources. For example, for some search engines, a query execution plan may need to be calculated each time a query is issued, which requires a search system to find the least expensive query execution plan to fully execute the query. This decreases throughput and increases network latency, and can waste valuable time.

Aspects of the technology described herein improve the functioning of the computer itself in light of these shortcomings in existing search technologies by providing a solution that enables a search system to categorize search queries to match query intent. In particular, some aspects are directed to a search system that generates category embeddings that encode information regarding hierarchical relationships between categories in a category taxonomy, as well as co-occurring relationships between categories and aspects of categories learned from search information.

In accordance with some aspects of the technology described herein, a category taxonomy provides a number of categories and hierarchical relationships (i.e., parent/child relationships) between categories. Co-occurring categories are identified from search information, for instance, based on which categories appear together in searches. This could be based on, for instance, categories of items returned for search queries and user interactions thereof, as well as user-selected and/or system-selected category constraints applied during users' search sessions. Initial embeddings are also generated for each category in the category taxonomy based on search information. For instance, an initial embedding for a category can be generated as an aggregate of query vectors for search queries associated with the category. Each query vector may be generated as an aggregate of item vectors for items associated with the corresponding search query.

Category embeddings are generated that encode information regarding the hierarchical relationships between categories from the category taxonomy, relationships between co-occurring categories, and the initial embeddings for the categories. For instance, in some aspects, an augmented graph is generated in which each node corresponds with a category and is associated with an initial embedding for its respective category. The augmented graph also includes edges based on hierarchical relationships and co-occurring relationships between categories. Category embeddings can then be generated over the augmented graph by sampling neighbor nodes for each category and generating a category embedding using the initial embeddings of neighbor nodes.

The category embeddings can be used for categorizing search queries when processing the search queries for item retrieval. For instance, in some aspects, category clusters are generated over the category embeddings. When a search query is received that corresponds with a category in a given category cluster, a category may be selected for the search query from the category cluster. This may include selecting a core intent category from the category cluster.

Aspects of the technology described herein provide a number of improvements over existing search technologies. For instance, computing resource consumption is improved relative to existing technologies. In particular, a category taxonomy can essentially be pruned into core categories that are identified based on category embeddings learned from hierarchical information and search information. As a result, a search query can be mapped, where appropriate, to a parent or ancestor category rather than a more narrow (i.e., deeper) category that is originally mapped to the search query, thereby preventing the search system from overly narrowing the search results returned. Additionally, the category embeddings allow categories to be clustered even when the categories do not have a parent/child/sibling relationship in the category taxonomy, thereby allowing for alternative category selection beyond parents/ancestors. As a result, the technology disclosed herein allows for query categorization that better matches the query intent. In turn, search results are returned that better match the query intent. This eliminates (or at least reduces) the repetitive user queries, search result selections, and rendering of items. Accordingly, aspects of the technology described herein decrease computing resource consumption, such as packet generation costs. For instance, a user query (e.g., an HTTP request), would only need to traverse a computer network once (or fewer times relative to existing technologies). Specifically, the contents or payload of the user query is supplemented with header information or other metadata within a packet in TCP/IP and other protocol networks once for the initial user query. Such packet for a user query is only sent over the network once or fewer times. Thus, there is no repetitive generation of metadata and continuous sending of packets over a computer network.

In like manner, aspects of the technology described herein improve storage device or disk I/O and query execution functionality, as they only need to go out to disk a single time (or fewer times relative to existing search technologies). As described above, the inadequacy of existing search technologies results in repetitive user queries, search result selections, and item renderings. This causes multiple traversals to disk. In contrast, aspects described herein reduce storage device I/O because the user provides only minimal inputs and so the computing system does not have to reach out to the storage device as often to perform a read or write operation. For example, the search engine can respond with search results that satisfy the user intent from a single user query (or few queries relative to existing technology). Accordingly, there is not as much wear on components, such as a read/write head, because disk I/O is substantially reduced.

Various configurations also improve query execution resource savings. Specifically, for example, the search system calculates a query execution plan on fewer queries relative to existing search technologies. This increases throughput and decreases network latency because aspects of the technology described herein do not have to repetitively calculate query execution plans because fewer user queries need to be executed, unlike existing search technologies.

### Example System for Item Retrieval using Query Core Intent Detection

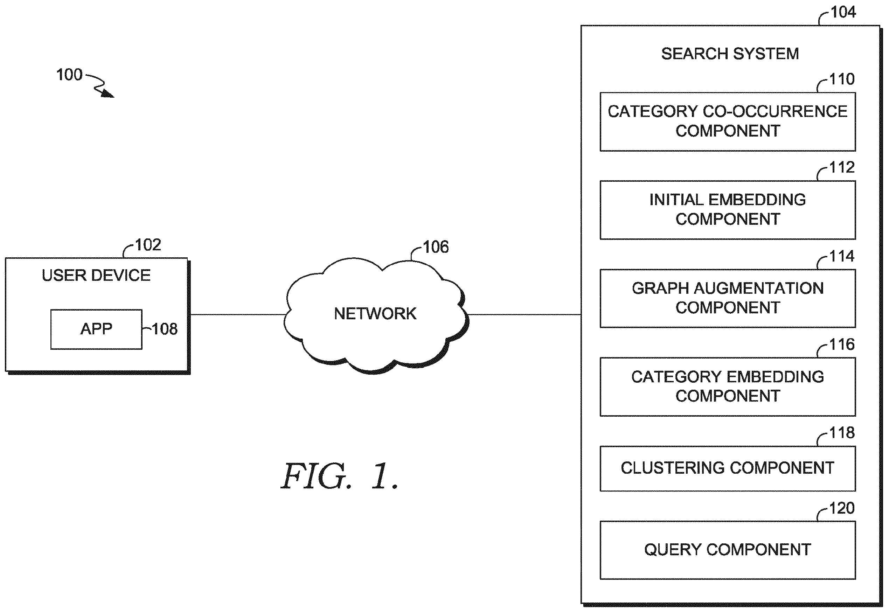

With reference now to the drawings, FIG. 1 is a block diagram illustrating an exemplary system 100 for item retrieval using query categorization based on core intent detection in accordance with implementations of the present disclosure. It should be understood that this and other arrangements described herein are set forth only as examples. Other arrangements and elements (e.g., machines, interfaces, functions, orders, and groupings of functions, etc.) can be used in addition to or instead of those shown, and some elements may be omitted altogether. Further, many of the elements described herein are functional entities that may be implemented as discrete or distributed components or in conjunction with other components, and in any suitable combination and location. Various functions described herein as being performed by one or more entities may be carried out by hardware, firmware, and/or software. For instance, various functions may be carried out by a processor executing instructions stored in memory.

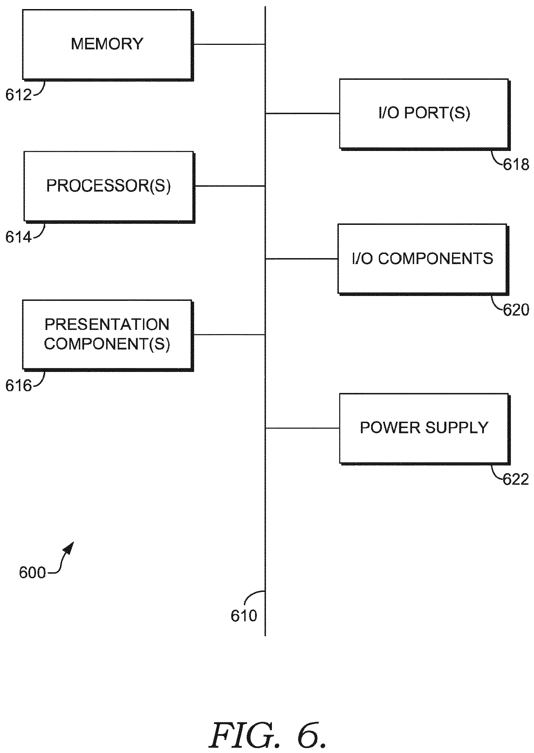

The system 100 is an example of a suitable architecture for implementing certain aspects of the present disclosure. Among other components not shown, the system 100 includes a user device 102 and a search system 104. Each of the user device 102 and search system 104 shown in FIG. 1 can comprise one or more computer devices, such as the computing device 600 of FIG. 6, discussed below. As shown in FIG. 1, the user device 102 and the search system 104 can communicate via a network 106, which may include, without limitation, one or more local area networks (LANs) and/or wide area networks (WANs). Such networking environments are commonplace in offices, enterprise-wide computer networks, intranets, and the Internet. It should be understood that any number of user devices and server devices may be employed within the system 100 within the scope of the present technology. Each may comprise a single device or multiple devices cooperating in a distributed environment. For instance, the search system 104 could be provided by multiple server devices collectively providing the functionality of the search system 104 as described herein. Additionally, other components not shown may also be included within the network environment.

The user device 102 can be a client device on the client-side of operating environment 100, while the search system 104 can be on the server-side of operating environment 100. The search system 104 can comprise server-side software designed to work in conjunction with client-side software on the user device 102 so as to implement any combination of the features and functionalities discussed in the present disclosure. For instance, the user device 102 can include an application 108 for interacting with the search system 104. The application 108 can be, for instance, a web browser or a dedicated application for providing functions, such as those described herein. This division of operating environment 100 is provided to illustrate one example of a suitable environment, and there is no requirement for each implementation that any combination of the user device 102 and the search system 104 remain as separate entities. While the operating environment 100 illustrates a configuration in a networked environment with a separate user device and search system, it should be understood that other configurations can be employed in which components are combined. For instance, in some configurations, a user device may also provide search/recommendation capabilities.

The user device 102 may comprise any type of computing device capable of use by a user. For example, in one aspect, the user device may be the type of computing device 600 described in relation to FIG. 6 herein. By way of example and not limitation, the user device 102 may be embodied as a personal computer (PC), a laptop computer, a mobile or mobile device, a smartphone, a tablet computer, a smart watch, a wearable computer, a personal digital assistant (PDA), an MP3 player, global positioning system (GPS) or device, video player, handheld communications device, gaming device or system, entertainment system, vehicle computer system, embedded system controller, remote control, appliance, consumer electronic device, a workstation, or any combination of these delineated devices, or any other suitable device where notifications can be presented. A user may be associated with the user device 102 and may interact with the search system 104 via the user device 102.

The search system 104 generally operates to identify items relevant to search queries and return search results for the identified items. In accordance with various aspects of the technology described herein, the search system 104 can search for items that correspond to anything that can be identified in response to a query. In some instances, items can correspond with digital content, such as an electronic document (e.g., from a productivity application), web page, a product listing (e.g., on an e-commerce site), a movie, a song, a photograph, or any other digital content. The digital content item may comprise text, image, audio, video, or any combination thereof. In other instances, items can correspond with physical objects, such as products for sale on an e-commerce site or individuals on social media sites.

In some configurations, the search system 104 may be part of a listing platform. Examples of listing platforms include e-commerce platforms, in which listed products or services are available for purchase by a user of a client device upon navigation to the platforms. Other examples of listing platforms include rental platforms listing various items for rent (e.g., equipment, tools, real estate, vehicles, contract employees) and media platforms listing digital content items (e.g., content for download). The functionality of a listing platform includes provision of interfaces enabling surfacing of items to users of the listing platform. Each item may comprise a listing of a product/service available for sale/rent via the listing platform. Each item may include a description comprising one or more of a price in a currency, reviews, images of the item, shipment options, a rating, a condition of the item, a size of the item, a color of the item, etc. In aspects, each item is associated with one or more categories including meta-categories and leaf categories. For example, the meta-categories are each divisible into subcategories (or branch categories), whereas leaf categories are not divisible. While a listing platform is provided as one example of an environment in which the search system 104 may be provided, it should be understood that the technology described herein can be employed in other contexts.

At a high level, the search system 104 generates category embeddings based on hierarchical relationships between categories in a category taxonomy, relationships between categories co-occurring in searches performed by the search system 104 (or other search system), and initial embeddings of the categories generated from search information. The category embeddings can be used in categorizing search queries when performing searches using the search queries. As shown in FIG. 1, the search system 104 includes a category co-occurrence component 110, initial embedding component 112, graph augmentation component 114, category embedding component 116, clustering component 118, and query component 120.

The components of the search system 104 may be in addition to other components that provide further additional functions beyond the features described herein. The search system 104 can be implemented using one or more server devices, one or more platforms with corresponding application programming interfaces, cloud infrastructure, and the like. While the search system 104 is shown separate from the user device 102 in the configuration of FIG. 1, it should be understood that in other configurations, some or all of the functions of the search system 104 can be provided on the user device 102.

In one aspect, the functions performed by components of the search system 104 are associated with one or more personal assistant applications, services, or routines. In particular, such applications, services, or routines may operate on one or more user devices, servers, may be distributed across one or more user devices and servers, or be implemented in the cloud. Moreover, in some aspects, these components of the search system 104 may be distributed across a network, including one or more servers and client devices, in the cloud, and/or may reside on a user device. Moreover, these components, functions performed by these components, or services carried out by these components may be implemented at appropriate abstraction layer(s) such as the operating system layer, application layer, hardware layer, etc., of the computing system(s). Alternatively, or in addition, the functionality of these components and/or the aspects of the technology described herein can be performed, at least in part, by one or more hardware logic components. For example, and without limitation, illustrative types of hardware logic components that can be used include Field-programmable Gate Arrays (FPGAs), Application-specific Integrated Circuits (ASICs), Application-specific Standard Products (ASSPs), System-on-a-chip systems (SOCs), Complex Programmable Logic Devices (CPLDs), etc. Additionally, although functionality is described herein with regards to specific components shown in example system 100, it is contemplated that in some aspects, functionality of these components can be shared or distributed across other components.

The category co-occurrence component 110 identifies co-occurring categories in search information. Co-occurring categories comprise pairs of categories that appear together in search information indicating a relationship between the categories. The search information can comprise a variety of information regarding searches performed using search queries. In some instances, the search information includes items identified as search results for each of a number of search queries. The search queries can be submitted by users (e.g., historical searches from a query log) and/or automatically processed by a search engine. For instance, for a given search query, the search information can identify the top N items returned as search results for that search query. In some instances, the search information can also include user behavior information. The user behavior information can identify user interactions with items returned as search results. The user interactions can include, for instance, selecting a search result to view an item, adding an item to a watch/wish list, adding an item to a cart, sharing an item, and/or purchasing an item. In some cases, the user behavior information can include information regarding a search session in which a user has submitted multiple related search queries.

The category co-occurrence component 110 can identify co-occurring categories from search information in a number of different manners within various aspects of the technology described herein. In some aspects, the category co-occurrence component 110 identifies co-occurring categories based search results for queries without reference to user behavior information. For instance, if a search query returns a threshold number or percentage of items in a first category and a threshold number or percentage of items in a second category, the first and second categories can be identified as co-occurring categories. In some configurations, the category co-occurrence component 110 may require the two categories to appear together in search results for a threshold number of search queries.

In other aspects, the category co-occurrence component 110 identifies co-occurring categories based on user interaction information. For instance, when a user receives search results, if a user interacts with a threshold number or percentage of items in a first category and a threshold number or percentage of items in a second category (for a single search query or across a search session of related search queries), the first and second categories can be identified as co-occurring categories. In some configurations, the category co-occurrence component 110 may require a threshold level of user interaction across multiple users to identify two categories as co-occurring categories.

In further aspects, the category co-occurrence component 110 identifies co-occurring categories based on user behavior information across a search session. For instance, if a user submits a search query and selects a first category for a search during a search session and then subsequently submits the same or a similar search query and selects a second category for a subsequent search during the search session, the first and second categories can be identified as co-occurring categories. In some cases, a search engine automatically applies category constraints to certain search queries. Co-occurring categories can be identified based on category constraints automatically applied to different search queries submitted by a user during a search session. Co-occurring categories can further be identified based on combinations of user-selected categories and system-selected category constraints applied to search queries during a search session. In some configurations, the category co-occurrence component 110 may require a threshold level of user interaction during search sessions across multiple users to identify two categories as co-occurring categories.

The initial embedding component 112 generates an initial embedding for each category in the category taxonomy. The initial embedding for a category can comprise a vector representation of aspects of the category. The initial embedding component 112 can use methods such as Word2Vec, fastText, BERT, and the like to generate the initial embedding for each category.

In some aspects, the initial embedding for a category comprises a vector representation of search information associated with the category. The search information can comprise a variety of information regarding searches performed using search queries. Among other things, the search information for a category can include information identifying search queries associated with the category. Associated search queries for a category can include the search queries for which the category is automatically applied by the search system as a category constraint when performing searches using those search queries. Associated search queries for a category can also include search queries for which a threshold number or percentage of the search results returned are items within the category. Associated search queries for a category can further include search queries relevant to a category based on user behavior information. For instance, associated search queries for a category can include search queries for which there has been a threshold level of user interaction with search results for items within the category. As another example, associated search queries for a category can include search queries for which users have selected the category as a filter when performing searches using the search queries.

In some configurations, the initial embedding component 112 generates an initial embedding for a category as an aggregate of query vectors for the search queries associated with the category. The aggregation of vectors may be referred to as "vector pooling" or "mean polling." Generally, aggregating vectors generates a single vector representation of the multiple vectors. Thus, the vectors can be "aggregated" into a single vector that is representative of the vectors being aggregated.

One method of vector aggregation that can be employed by the initial embedding component 112 includes averaging. That is, the vectors comprise values that numerically represent a position in a multidimensional space relative to other vectors. These values can be averaged to provide an averaged aggregate vector that comprises values representative of the average of the vectors. Another vector aggregation method includes a weighted average in which weights may be applied, for instance, based on user interactions.

Accordingly, the initial embedding component 112 can generate an initial embedding of a category as an aggregation of query vectors for search queries associated with the category. The query vectors for associated search queries can be generated in a number of different manners. In some instances, a query vector for a search query can be generated based on the keywords of the search query. In other instances, a query vector for a search query can be generated based on items associated with the search query. Associated items for a search query can include items returned as search results for the search query and/or items for which there has been a threshold level of user interaction with as search results for the search query. An item vector for an item can be generated using information from the item, such as text, images, video, and audio.

In accordance with some configurations, to generate an initial embedding for a category, the initial embedding component 112 identifies associated search queries for the category. For each associated search query, the initial embedding component 112 identifies items associated with the search query, generates item vectors for the associated items, and generates a query vector for the search query as an aggregation of the item vectors for the items associated with the search query. The initial embedding component 112 can then generate the initial embedding for the category as an aggregation of the query vectors for the associated search queries for the category.

Using the co-occurring categories identified by the category co-occurrence component 110 and the initial embeddings generated by the initial embedding component 112, the graph augmentation component 114 augments the category taxonomy to generate an augmented graph. The category taxonomy can comprise a graph in which each node comprises a category and edges between nodes represent a hierarchical relationship (i.e., parent/child) between the categories represented by the nodes. The graph augmentation component 114 augments the category taxonomy by adding edges between co-occurring categories. The graph augmentation component 114 also augments the category taxonomy by associating each initial embedding with the node for its corresponding category. As a result, the augmented graph comprises nodes in which each node is associated with an initial embedding for a category, a first set of edges between nodes that represent a hierarchical relationship (i.e., parent/child) between the categories represented by the nodes, and a second set of sedges between nodes that represent a co-occurrence relationship between the categories represented by the nodes.

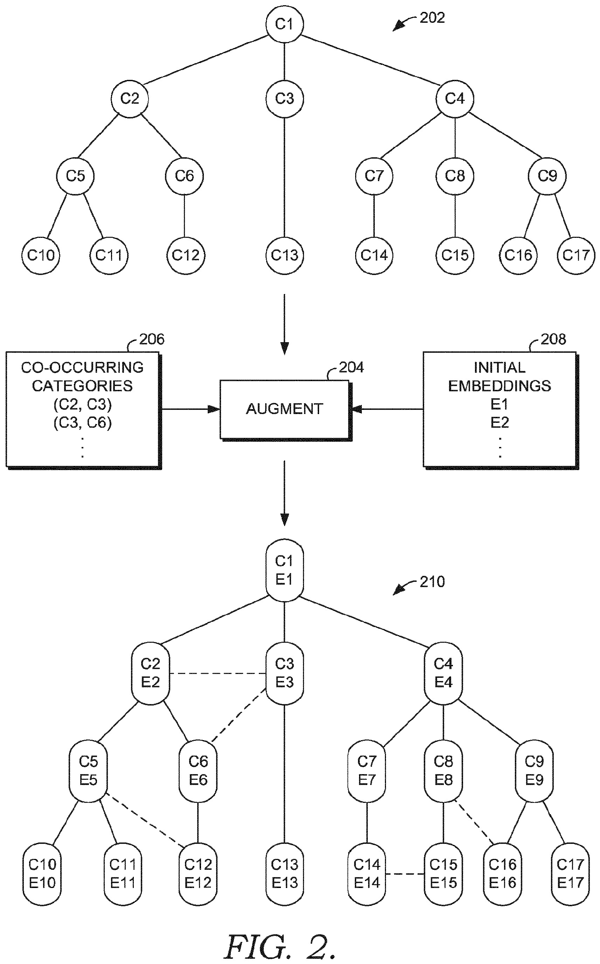

FIG. 2 is a diagram showing an example of generating an augmented graph, which may be performed, for instance, by the category co-occurrence component 110, the initial embedding component 112, and the graph augmentation component 114 of FIG. 1. As shown in FIG. 2, a category taxonomy 202 is provided in which each node corresponds with a category (e.g., C1, C2, etc.) and each edge between nodes represents a hierarchical relationship between the categories corresponding with the nodes. It should be understood that the category taxonomy 202 shown in FIG. 2 is a simplified graph with a limited number of categories provided for illustration purposes only. In practice, a category taxonomy may contain a significantly greater number of categories.

The category taxonomy 202 is augmented 204 based on identified co-occurring categories 206 and initial embeddings 210 generated for each category to produce an augmented graph 210. The augmented graph 210 includes nodes corresponding with each category in which the initial embedding (e.g., E1, E2, etc.) for each category is associated with the corresponding node for the category. The augmented graph 210 includes edges between the nodes based on hierarchical relationships between categories from the category taxonomy 202. These hierarchical relationship edges are shown as solid lines in FIG. 2. The augmented graph 210 also includes edges based on identification of co-occurring categories. In particular, an edge is added between each pair of co-occurring categories. The co-occurring category edges are shown as dashed lines in FIG. 2.

Returning to FIG. 1, the category embedding component 116 generates a category embedding for each category. Generally, the category embedding component 116 can generate a category embedding for each category based on the co-occurring categories identified by the category co-occurrence component 110 and the initial embeddings generated by the initial embedding component 112. In some aspects, the final embedding component 116 generates the category embeddings using the augmented category graph generated by the graph augmentation component 114. For instance, the category embeddings can be generated using GraphSAGE. In some aspects, the category embedding component 116 generates a category embedding for a given category by sampling nodes linked by edges to the node for the given category. This can include directly linked nodes (i.e., 1-hop nodes), as well as indirectly linked nodes (i.e., 2-hop, 3-hop, ... n-hop nodes). The linked nodes are based on both the hierarchical edges and the co-occurring category edges. The category embedding for the given category is generated by aggregating the feature information from the sampled nodes. The feature information for each node can include, among other information, the initial embeddings for each node generated by the initial embedding component 112.

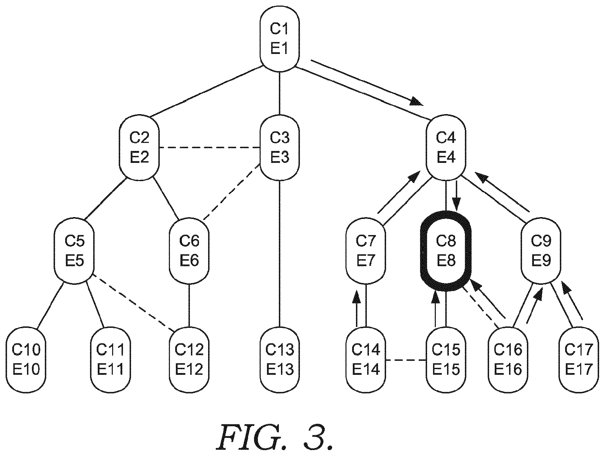

FIG. 3 provides a diagram showing an example of generation of a category embedding for a given category. In particular, a category embedding for category C8 is generated by sampling neighbor nodes for the node for category C8. This includes 1 -hop neighbor categories (C4, C15, C16) and 2-hop neighbor categories (C1, C7, C9) and 3-hop neighbor categories (C14, C16, C17). The category embedding for category C8 is generated using, at least in part, initial embeddings for each of the sampled neighbors (E1, E4, E7, E9, E14, E15, E16, E17).

Referring again to FIG. 1, the clustering component 118 forms clusters of categories using the category embeddings generated by the category embedding component 116. Any of a variety of different techniques can be used for clustering, such as, for instance, agglomerative clustering, k-means clustering, mean shift clustering, or density-based spatial clustering (DBSCAN). The clustering technique used by the clustering component 118 can form category clusters over the category embeddings. Each category cluster represents a group of categories that are related to one another and may be used when categorizing a search query.

The query component 120 returns search results in response to search queries. Among other things, the query component 120 categorizes a search query by selecting one or more categories for the search query using the category embeddings generated by the category embedding component 116 and/or the category clusters formed by the clustering component 118. In some configurations, the query component 120 uses each selected category for a search query to filter search results. For instance, if a single category is selected for a given search query, only items within that category are returned as search results. If two or more categories are selected, only items belonging to either of those two categories are returned as search results. Alternatively, each selected category for a search query can be used when ranking items for search results. For instance, the query component 120 can rank items within each selected category higher than items in other categories.

The query component 120 can employ the category embeddings and/or category clusters to select one or more categories for a given search query in a variety of different ways within the scope of the technology described herein. In some cases, the query component selects one or more categories for a given search query using the category embeddings. By way of example only and not limitation, in some configurations, a query vector can be generated for the search query, and the category embedding closest to the query vector can be selected for categorizing.

In other cases, the query component selects one or more categories for a given search query using the category clusters. By way of example only and not limitation, in some configurations, the category clusters may be tight clusters such that each cluster includes only a small number of highly-related categories. When a search query is mapped to a category in the cluster, each category in the cluster can be selected and used for categorizing the search query.

In further configurations, a core intent category is selected for a category cluster, and when a search query is mapped to a category in the cluster, the core intent category is selected and used for categorizing the search query. A core intent category corresponds with a category that likely represents a core intent of search queries mapped to categories in the category cluster. A core intent category for a category cluster can be determined, for instance, by generating a single representation of category embeddings in the category cluster. For instance, vector aggregation can be used to generate a cluster representation from the category embeddings in the category cluster. A distance (e.g., cosine similarity) can then be determined between each category embedding in the category cluster and the cluster representation. A core intent category can then be selected based on the category having a category embedding closest to the cluster representation. In some instance, multiple core intent categories can be selected. For instance, each category having a category embedding within a threshold distance of the cluster representation can be selected as a core intent category for the category cluster.

### Example Methods for Item Retrieval using Query Core Intent Detection

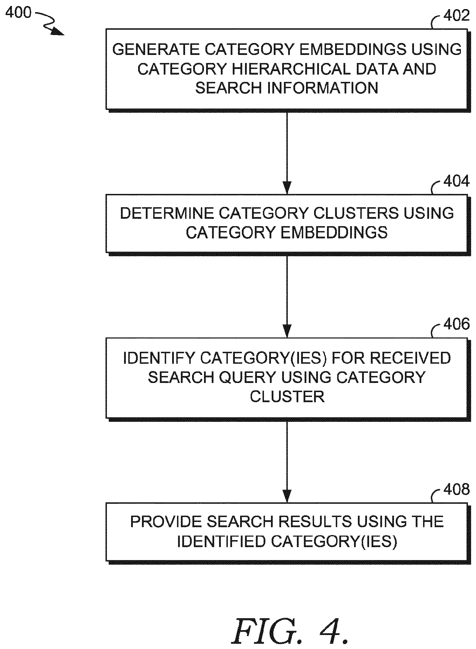

With reference now to FIG. 4, a flow diagram is provided that illustrates a method 400 for item retrieval using query categorization based on query core intent detection. The method 400 may be performed, for instance, by the search system 104 of FIG. 1. Each block of the method 400 and any other methods described herein comprises a computing process performed using any combination of hardware, firmware, and/or software. For instance, various functions can be carried out by a processor executing instructions stored in memory. The methods can also be embodied as computer-usable instructions stored on computer storage media. The methods can be provided by a standalone application, a service or hosted service (standalone or in combination with another hosted service), or a plug-in to another product, to name a few.

As shown at block 402, category embeddings are generated for categories from a category taxonomy using hierarchical data from the category taxonomy and search information. In some configurations, co-occurring categories are determined from the search information. Additionally, initial embeddings are generated for the categories using the search information. The categories embeddings are generated based on hierarchical and co-occurring relationships between categories and the initial embeddings for the categories. In some aspects, this includes augmenting the category taxonomy with the co-occurring category relationships and initial embeddings to provide an augmented graph and generating the category embeddings using the augmented graph.

Category clusters are formed using the category embeddings, as shown at block 404. As noted above, any of a variety of clustering techniques can be employed to form the category clusters, such as, for instance, agglomerative clustering, k-means clustering, mean shift clustering, or density-based spatial clustering (DBSCAN).

One or more categories are selected for a received search query using a category cluster, as shown at block 406. When a search query is received, the search query may be initially mapped to a category. The category cluster for the mapped category is identified, and the one or more categories are selected from that category cluster. In some configurations, a core intent category is selected from the category cluster. The core intent category can be determined by generating a cluster representation from the category embeddings of categories in the category cluster, and determining the category having a category embedding closest to the category embedding. In some instances, multiple core intent categories can be selected.

As shown at block 408, search results are provided by selecting items using the one or more categories selected at block 406. In some configurations, items may be filtered based on the one or more categories. In other configurations, items may be ranked based on the one or more categories.

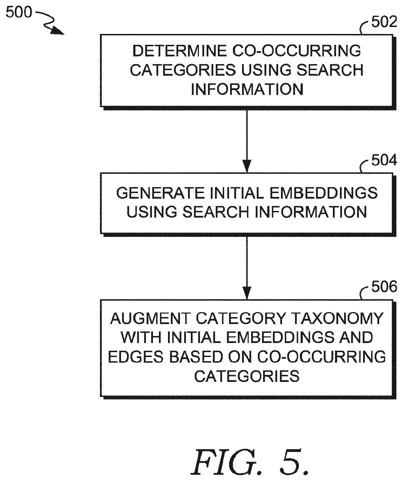

Turning next to FIG. 5, a flow diagram is provided that illustrates a method 500 for generating an augmented graph from a category taxonomy and search information. As shown at block 502, co-occurring categories are identified from search information. Generally, co-occurring categories are pairs of categories that appear together when searches are performed. Co-occurring categories may be identified, for instance, in search results for a single search query or across search queries during a search session.

Initial embeddings for categories from the category taxonomy are generated using search information, as shown at block 504. In accordance with some configurations, an initial embedding for a category is generated as an aggregation of query vectors for search queries associated with the category. The query vector for a search query may be generated as an aggregation of item vectors for items associated with the search query.

The category taxonomy is augmented based on the co-occurring categories and category embeddings to form an augmented graph, as shown 506. In some aspects, each node in the augmented graph corresponds with a category and is associated with the category embedding for the corresponding category. Edges between nodes are based on both hierarchical data from the category taxonomy and relationships between co-occurring categories.

### Exemplary Operating Environment

Having described implementations of the present disclosure, an exemplary operating environment in which embodiments of the present technology may be implemented is described below in order to provide a general context for various aspects of the present disclosure. Referring initially to FIG. 6 in particular, an exemplary operating environment for implementing embodiments of the present technology is shown and designated generally as computing device 600. Computing device 600 is but one example of a suitable computing environment and is not intended to suggest any limitation as to the scope of use or functionality of the technology. Neither should the computing device 600 be interpreted as having any dependency or requirement relating to any one or combination of components illustrated.

The technology may be described in the general context of computer code or machine-useable instructions, including computer-executable instructions such as program modules, being executed by a computer or other machine, such as a personal data assistant or other handheld device. Generally, program modules including routines, programs, objects, components, data structures, etc., refer to code that perform particular tasks or implement particular abstract data types. The technology may be practiced in a variety of system configurations, including hand-held devices, consumer electronics, general-purpose computers, more specialty computing devices, etc. The technology may also be practiced in distributed computing environments where tasks are performed by remote-processing devices that are linked through a communications network.

With reference to FIG. 6, computing device 600 includes bus 610 that directly or indirectly couples the following devices: memory 612, one or more processors 614, one or more presentation components 616, input/output (I/O) ports 618, input/output components 620, and illustrative power supply 622. Bus 610 represents what may be one or more busses (such as an address bus, data bus, or combination thereof). Although the various blocks of FIG. 6 are shown with lines for the sake of clarity, in reality, delineating various components is not so clear, and metaphorically, the lines would more accurately be grey and fuzzy. For example, one may consider a presentation component such as a display device to be an I/O component. Also, processors have memory. The inventors recognize that such is the nature of the art, and reiterate that the diagram of FIG. 6 is merely illustrative of an exemplary computing device that can be used in connection with one or more embodiments of the present technology. Distinction is not made between such categories as "workstation," "server," "laptop," "hand-held device," etc., as all are contemplated within the scope of FIG. 6 and reference to "computing device."

Computing device 600 typically includes a variety of computer-readable media. Computer-readable media can be any available media that can be accessed by computing device 600 and includes both volatile and nonvolatile media, removable and non-removable media. By way of example, and not limitation, computer-readable media may comprise computer storage media and communication media. Computer storage media includes both volatile and nonvolatile, removable and non-removable media implemented in any method or technology for storage of information such as computer-readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computing device 600. Computer storage media does not comprise signals per se. Communication media typically embodies computer-readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of any of the above should also be included within the scope of computer-readable media.

Memory 612 includes computer storage media in the form of volatile and/or nonvolatile memory. The memory may be removable, non-removable, or a combination thereof. Exemplary hardware devices include solid-state memory, hard drives, optical-disc drives, etc. Computing device 600 includes one or more processors that read data from various entities such as memory 612 or I/O components 620. Presentation component(s) 616 present data indications to a user or other device. Exemplary presentation components include a display device, speaker, printing component, vibrating component, etc.

I/O ports 618 allow computing device 600 to be logically coupled to other devices including I/O components 620, some of which may be built in. Illustrative components include a microphone, joystick, game pad, satellite dish, scanner, printer, wireless device, etc. The I/O components 620 may provide a natural user interface (NUI) that processes air gestures, voice, or other physiological inputs generated by a user. In some instance, inputs may be transmitted to an appropriate network element for further processing. A NUI may implement any combination of speech recognition, touch and stylus recognition, facial recognition, biometric recognition, gesture recognition both on screen and adjacent to the screen, air gestures, head and eye-tracking, and touch recognition associated with displays on the computing device 600. The computing device 600 may be equipped with depth cameras, such as, stereoscopic camera systems, infrared camera systems, RGB camera systems, and combinations of these for gesture detection and recognition. Additionally, the computing device 600 may be equipped with accelerometers or gyroscopes that enable detection of motion.

The present technology has been described in relation to particular embodiments, which are intended in all respects to be illustrative rather than restrictive. Alternative embodiments will become apparent to those of ordinary skill in the art to which the present technology pertains without departing from its scope.

Having identified various components utilized herein, it should be understood that any number of components and arrangements may be employed to achieve the desired functionality within the scope of the present disclosure. For example, the components in the embodiments depicted in the figures are shown with lines for the sake of conceptual clarity. Other arrangements of these and other components may also be implemented. For example, although some components are depicted as single components, many of the elements described herein may be implemented as discrete or distributed components or in conjunction with other components, and in any suitable combination and location. Some elements may be omitted altogether. Moreover, various functions described herein as being performed by one or more entities may be carried out by hardware, firmware, and/or software, as described below. For instance, various functions may be carried out by a processor executing instructions stored in memory. As such, other arrangements and elements (e.g., machines, interfaces, functions, orders, and groupings of functions) can be used in addition to or instead of those shown.

Embodiments described herein may be combined with one or more of the specifically described alternatives. In particular, an embodiment that is claimed may contain a reference, in the alternative, to more than one other embodiment. The embodiment that is claimed may specify a further limitation of the subject matter claimed.

The subject matter of embodiments of the technology is described with specificity herein to meet statutory requirements. However, the description itself is not intended to limit the scope of this patent. Rather, the inventors have contemplated that the claimed subject matter might also be embodied in other ways, to include different steps or combinations of steps similar to the ones described in this document, in conjunction with other present or future technologies. Moreover, although the terms "step" and/or "block" may be used herein to connote different elements of methods employed, the terms should not be interpreted as implying any particular order among or between various steps herein disclosed unless and except when the order of individual steps is explicitly described.

For purposes of this disclosure, the word "including" has the same broad meaning as the word "comprising," and the word "accessing" comprises "receiving," "referencing," or "retrieving." Further, the word "communicating" has the same broad meaning as the word "receiving," or "transmitting" facilitated by software or hardware-based buses, receivers, or transmitters using communication media described herein. In addition, words such as "a" and "an," unless otherwise indicated to the contrary, include the plural as well as the singular. Thus, for example, the constraint of "a feature" is satisfied where one or more features are present. Also, the term "or" includes the conjunctive, the disjunctive, and both (a or b thus includes either a or b, as well as a and b).

For purposes of a detailed discussion above, embodiments of the present technology are described with reference to a distributed computing environment; however, the distributed computing environment depicted herein is merely exemplary. Components can be configured for performing novel embodiments of embodiments, where the term "configured for" can refer to "programmed to" perform particular tasks or implement particular abstract data types using code. Further, while embodiments of the present technology may generally refer to the technical solution environment and the schematics described herein, it is understood that the techniques described may be extended to other implementation contexts.

From the foregoing, it will be seen that this technology is one well adapted to attain all the ends and objects set forth above, together with other advantages which are obvious and inherent to the system and method. It will be understood that certain features and subcombinations are of utility and may be employed without reference to other features and subcombinations. This is contemplated by and is within the scope of the claims.

## Claims

1. A computer-implemented method comprising:
generating, using a neural network, a category embedding for each category in a plurality of categories using hierarchical data for the plurality of categories and search information;
determining category clusters for the plurality of categories using the category embeddings;
identifying one or more categories for a received search query using the category clusters; and
providing a set of search results for the received search query using the identified one or more categories.

2. The computer-implemented method of claim 1, wherein the method further comprises:
generating an augmented graph by augmenting a category taxonomy with augmented data using the search information, the augmented graph comprising the plurality of categories; and
wherein the neural network generates the category embeddings using the augmented graph.

3. The computer-implemented method of claim 2, wherein the category taxonomy comprises a plurality of nodes with a first set of edges between nodes, each node corresponding with a respective category from the plurality of categories and the first set of edges identifying hierarchical relationships between categories from the plurality of categories.

4. The computer-implemented method of claim 3, wherein generating the augmented graph comprises:
identifying co-occurring categories among the plurality of categories using the search information; and
adding a second set of edges to the augmented graph between the co-occurring categories determined using the search information.

5. The computer-implemented method of claim 3 or 4, wherein generating the augmented graph further comprises:
generating an initial embedding for each category from the plurality of categories using the search information; and
adding the initial embedding for each respective category to the category node for each respective category.

6. The computer-implemented method of any one of claims 1 to 5, wherein identifying the one or more categories for a received search query comprises:
identifying a first category cluster for the received search query;
determining a core intent category from the first category cluster; and
associating the core intent category with the received search query.

7. The computer-implemented method of claim 6, wherein determining the core intent category from the first category cluster comprises:
determining a representation for the first category cluster using the category embeddings for categories in the first category cluster;
determining a similarity between the category embedding for each category in the first category cluster and the representation for the first category cluster; and
selecting the core intent category based on the similarities.

8. One or more computer storage media storing computer-useable instructions that, when used by a computing device, cause the computing device to perform operations, the operations comprising:
generating, using a neural network, a category embedding for each category in a plurality of categories using hierarchical data for the plurality of categories and search information;
determining category clusters for the plurality of categories using the category embeddings;
identifying one or more categories for a received search query using the category clusters; and
providing a set of search results for the received search query using the identified one or more categories.

9. The computer storage media of claim 8, wherein the operations further comprise:
generating an augmented graph by augmenting a category taxonomy with augmented data using the search information, the augmented graph comprising the plurality of categories; and
wherein the neural network generates the category embeddings using the augmented graph.

10. The computer storage media of claim 9, wherein the category taxonomy comprises a plurality of nodes with a first set of edges between nodes, each node corresponding with a respective category from the plurality of categories and the first set of edges identifying hierarchical relationships between categories from the plurality of categories.

11. The computer storage media of claim 10, wherein generating the augmented graph comprises:
identifying co-occurring categories among the plurality of categories using the search information; and
adding a second set of edges to the augmented graph between the co-occurring categories determined using the search information.

12. The computer storage media of claim 10 or 11, wherein generating the augmented graph further comprises:
generating an initial embedding for each category from the plurality of categories using the search information; and
adding the initial embedding for each respective category to the category node for each respective category.

13. The computer storage media of any one of claims 8 to 12, wherein identifying the one or more categories for a received search query comprises:
identifying a first category cluster for the received search query;
determining a core intent category from the first category cluster; and
associating the core intent category with the received search query.

14. The computer storage media of claim 13, wherein determining the core intent category from the first category cluster comprises:
determining a representation for the first category cluster using the category embeddings for categories in the first category cluster;
determining a similarity between the category embedding for each category in the first category cluster and the representation for the first category cluster; and
selecting the core intent category based on the similarities.

15. A computer system comprising:
a processor; and
a computer storage medium storing computer-useable instructions that, when used by the processor, causes the computer system to perform operations according to the method of any one of claims 1 to 7.
